# FASCICULE DE BREVET EUROPEEN

(11) **EP 2 156 232 B1**
(45) Date de publication et mention de la délivrance du brevet: **17.08.2011**
(21) Numéro de dépôt: 08805966.2
(22) Date de dépôt: 10.06.2008
(51) Int. Cl.: G02B 6/44

(54) **ORGANE DE DERIVATION DE FIBRE OPTIQUE.**
GLASFASERHAHN
OPTICAL FIBRE TAP

(30) Priorité: 11.06.2007 FR 0755667
(43) Date de publication de la demande: 24.02.2010
(73) Titulaire: Free, Paris 75008 (FR)
(72) Inventeur: FORTIER, Eric, F-77720 Aubepierre Ozouer Le Repos (FR)
(74) Mandataire: Dupuis-Latour, Dominique
(86) Numéro de dépôt international: PCT/FR2008/051031
(87) Numéro de publication internationale: WO 2008/152340

(56) Documents cités:
- WO-A-97/42694
- JP-A- 62 054 204
- US-A1- 2005 111 799
- US-A1- 2006 291 792
- US-A1- 2007 104 446

## Description

L'invention concerne l'installation des réseaux de fibres optiques.

Elle s'applique en particulier, mais non exclusivement, à l'installation de réseaux de fibres optiques dans les parties communes d'un ensemble d'habitations, notamment pour la fourniture de services de communication haut-débit.

Le réseau de fibres optiques d'un ensemble d'habitations comprend généralement un câble d'adduction comprenant un faisceau de plusieurs fibres optiques. Dans l'immeuble, ce faisceau est divisé en plusieurs faisceaux secondaires comprenant chacun une ou plusieurs fibres. Généralement, chaque faisceau secondaire se présente sous la forme d'un câble de palier comprenant toutes les fibres permettant de raccorder les habitations d'un même palier d'immeuble au câble d'adduction. Le câble de palier s'étend dans un conduit, habituellement appelé goulotte. Afin d'extraire une des fibres du câble de palier et de la raccorder à une des habitations, le réseau comprend un boîtier de dérivation. Ce boîtier de dérivation présente généralement deux ouvertures pour l'entrée et la sortie du câble ainsi qu'une ouverture pour la sortie de la fibre extraite,

De telles configurations sont décrites par exemple dans les US 2007/0104446 A1, US 2005/ 0111799 A1, US 2006/ 0291792 A1 ou WO 97/42694 A1.

La goulotte présente une première ouverture permettant de faire sortir le câble de palier de la goulotte. Le câble pénètre dans le boîtier de dérivation où la fibre est extraite, puis sort du boîtier de dérivation pour pénétrer à nouveau dans la goulotte par une deuxième ouverture ménagée dans celle-ci.

Or, le câble présente, d'une part, entre la première ouverture de la goulotte et le boîtier de dérivation et, d'autre part, entre le boîtier de dérivation et la deuxième ouverture de la goulotte, quatre portions courbées, avec des rayons de courbures assez faibles, risquant d'être néfastes pour la transmission du futur signal destiné à parcourir les fibres. De plus, les première et deuxième ouvertures pénalisent l'esthétique de la goulotte et donc du palier.

Un but de l'invention est de préserver autant que possible la transmission du signal dans les fibres du câble et d'améliorer l'aspect de la dérivation

A cet effet, l'invention a pour objet un organe de dérivation du type général divulgué par le US 2007/0104446 A1 précité, correspondant au préambule de la revendication 1, et présentant les éléments spécifiques énoncés dans la partie caractérisante de cette revendication 1.

L'ensemble comprenant l'organe de dérivation monté sur un conduit selon l'invention permet une bonne transmission du signal dans les fibres du câble. En effet, l'organe de dérivation permet de supporter le câble à l'intérieur du conduit. Ainsi, le câble ne s'étendant plus à l'extérieur du conduit, le câble ne présente plus de portions à courbures prononcées, mais uniquement des portions présentant des rayons de courbure très grands ou encore des portions rectilignes.

De plus, de tels moyens de positionnement améliorent l'esthétique général de l'ensemble. En effet, le support de câble étant dans le conduit, il n'est pas visible depuis l'extérieur.

Avantageusement, les moyens de positionnement sont agencés de sorte que le support de fibre optique s'étend au moins en partie à l'intérieur du conduit dans ladite position.

De tels moyens de positionnement permettent également d'améliorer la transmission du signal dans une fibre dérivée supportée par le support de fibre. En effet, le support de fibre optique porte la fibre optique dérivée du câble. Le support de fibre étant au moins en partie localisé dans le conduit, il est situé relativement proche du support de câble. Le câble étant porté par le support de câble, la fibre dérivée est peu ou pas courbée.

De plus, de tels moyens de positionnement améliorent l'esthétique générale de l'ensemble. En effet, le support de fibre étant dans le conduit, il n'est pas visible depuis l'extérieur.

Selon une caractéristique optionnelle de l'ensemble selon l'invention, les moyens de positionnement comprennent au moins une platine apte à prendre appui contre le conduit dans ladite position, de préférence à l'extérieur du conduit.

De tels moyens de positionnement permettent une installation très simple de l'organe. La platine sert de surface de référence pour la mise en place de l'organe. De préférence, la platine permet de positionner l'organe de dérivation depuis l'extérieur du conduit contre celui-ci, ce qui rend l'installation de l'ensemble très aisée.

Selon une caractéristique optionnelle de l'ensemble selon l'invention, le conduit présente une ouverture ménagée dans une paroi du conduit, les moyens de positionnement étant agencés de sorte que l'organe s'étend en partie dans l'ouverture dans ladite position.

Selon d'autres caractéristiques optionnelles de l'ensemble selon l'invention:
- L'ensemble comprend des moyens de fixation de l'organe au conduit dans ladite position, de préférence portés par l'organe.
- Les moyens de fixation comprennent au moins un crochet d'emboîtement de l'organe sur le conduit dans ladite position.

Avantageusement, le support de fibre optique définit au moins un canal de maintien de la fibre optique, voire plusieurs, le ou chaque canal étant, de préférence, apte à maintenir plusieurs fibres optiques.

Un tel support permet de dériver plusieurs fibres et d'assurer le support de chacune d'entre elles.

Avantageusement, le ou chaque support de fibre optique est agencé de sorte que le ou chaque canal est incliné par rapport à une direction longitudinal de l'organe de dérivation.

Le ou chaque canal maintient ainsi la ou les fibres optiques qu'il reçoit suivant une direction permettant d'éviter de créer des rayons de courbures trop petits le long de la ou des fibres dérivées.

De façon optionnelle, l'ensemble comporte un deuxième support de fibre optique, les supports de fibre optique s'étendant, de préférence, de part et d'autre du support de câble.

L'ensemble permet à un installateur de changer le sens suivant lequel la fibre dérivée s'étend. En effet, pour dériver la fibre, une ouverture est ménagée sur une portion du câble située entre les deux supports de fibre optique. Ainsi, l'installateur peut choisir que la fibre soit portée par l'un ou l'autre des supports, l'un d'eux permettant à la fibre de s'étendre dans le même sens que sons sens dans le câble duquel elle est extraite, l'autre permettant à la fibre de s'étendre en sens inverse. Les deux supports de fibres permettent aussi d'extraire du câble, au même endroit, des fibres partant en sens contraire l'une de l'autre.

Avantageusement, le ou chaque support de fibre optique s'étend intégralement à une hauteur supérieure à une hauteur d'une face d'appui de câble du support de câble.

Le câble peut ainsi s'étendre entre le ou chaque support de fibre optique et le support de câble, par référence à la hauteur de l'organe de dérivation.

L'invention a également pour objet un réseau de fibres optiques comprenant au moins un ensemble tel que défini ci-dessus.

L'invention sera mieux comprise à la lecture de la description qui va suivre, donnée uniquement à titre d'exemple non limitatif et faite en se référant aux dessins dans lesquels :
- la figure 1 est une représentation schématique d'un réseau selon l'invention comprenant plusieurs ensembles selon l'invention ;
- la figure 2 est une vue en perspective d'un des ensembles de la figure 1 montrant une portion d'un conduit et un organe de dérivation;
- la figure 3 est une vue en perspective d'un châssis de l'organe de dérivation de la figure 2 portant un câble à fibres optiques et positionné contre le conduit;
- la figure 4 est une vue de dessus du châssis de la figure 3 ;
- la figure 5 est une vue du châssis de la figure 4 selon la flèche V ;
- la figure 6 est une vue en perspective d'un couvercle de l'organe de dérivation de la figure 2, et
- la figure 7 est une vue du couvercle de la figure 6 selon la flèche VII.

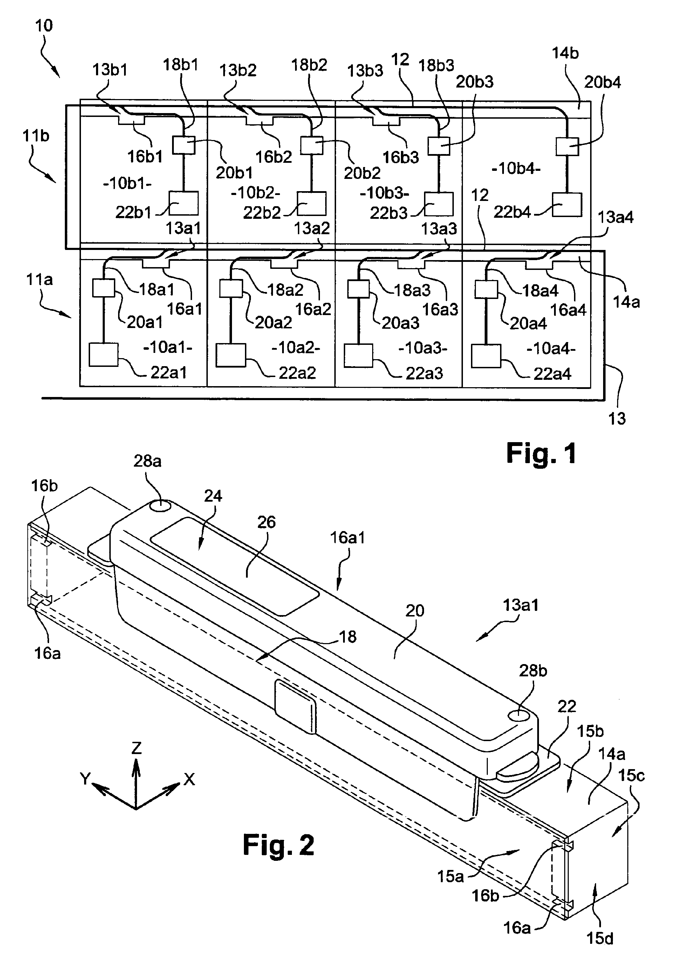

On a représenté sur la figure 1 un ensemble d'habitations désigné par la référence générale 10. L'ensemble d'habitations, en l'espèce un immeuble, comprend huit habitations séparées 10a1, 10a2, 10a3, 10a4, 10b1, 10b2, 10b3, 10b4 réparties sur deux paliers 11 a, 11 b, ainsi qu'un réseau 12 de fibres optiques reliant chaque habitation à un câble 13, dit d'adduction. Le câble d'adduction 13 comprend une pluralité de fibres optiques.

Les paliers 11a, 11b comprennent des ensembles 13a1, 13a2, 13a3, 13a4, 13b1, 13b2, 13b3 selon l'invention comprenant un conduit 14a, respectivement 14b, et plusieurs organes de dérivation 16a1, 16a2, 16a3, 16a4, respectivement 16b1, 16b2, 16b3. En l'espèce chaque conduit, appelé également goulotte, est situé à proximité du plafond de chaque palier. Chaque organe de dérivation permet de dériver les fibres du câble 13, en l'espèce une fibre pour chaque habitation. Les organes 16a1, 16a2, 16a3, 16a4, 16b1, 16b2, 16b3 dérivent respectivement des fibres 18a1, 18a2, 18a3, 18a4, 18b1, 18b2, 18b3 du câble 13. Chaque fibre extraite est respectivement reliée à un boîtier d'habitation 20a1, 20a2, 20a3, 20a4, 20b1, 20b2, 20b3, 20b4 de chaque habitation. Enfin, chaque boîtier d'habitation est relié à des moyens tels que des terminaux 22a1, 22a2, 22a3, 22a4, 22b1, 22b2, 22b3, 22b4. Ces terminaux peuvent comprendre par exemple des moyens de réception, de décodage et de traitement de signal haut débit ou très haut débit pour des applications de type internet, téléphonie, télévision etc. au sein de chaque habitation.

On a représenté sur la figure 2 l'ensemble 13a1 sans le câble 13, ni la fibre 18a1. Sur cette figure et les suivantes, on a représenté des axes X, Y, Z orthogonaux entre eux correspondant aux orientations longitudinale Y, transversale X et verticale Z de l'ensemble tel qu'illustré. Les directions X et Y sont horizontales. Le conduit 14a est représenté en transparence pour des raisons évidentes de clarté.

Le conduit 14a est formé au moyen d'un ou plusieurs profilés. Il présente en l'espèce une section transversale à profil fermé rectangulaire. Le conduit 14a comprend quatre parois 15a, 15b, 15c, 15d respectivement parallèles aux plans YZ, XY, YZ, XY. La paroi 15a est rapportée de façon amovible au conduit 14a et fixée à ce dernier par des glissières à clips 16a, 16b s'étendant parallèlement l'une à l'autre selon la direction Y. Le conduit 14a présente une ouverture 18 ménagée dans la paroi 15b. Cette ouverture reçoit l'organe 16a1.

L'organe 16a1 comprend un couvercle 20 et un châssis 22. Le couvercle 20 comprend une vitre transparente d'identification 24 de l'organe de dérivation recouvrant un espace d'identification 26 destiné à recevoir, par exemple, une étiquette. Le couvercle 20 présente également deux orifices 28a, 28b pour la fixation du couvercle sur le châssis 22.

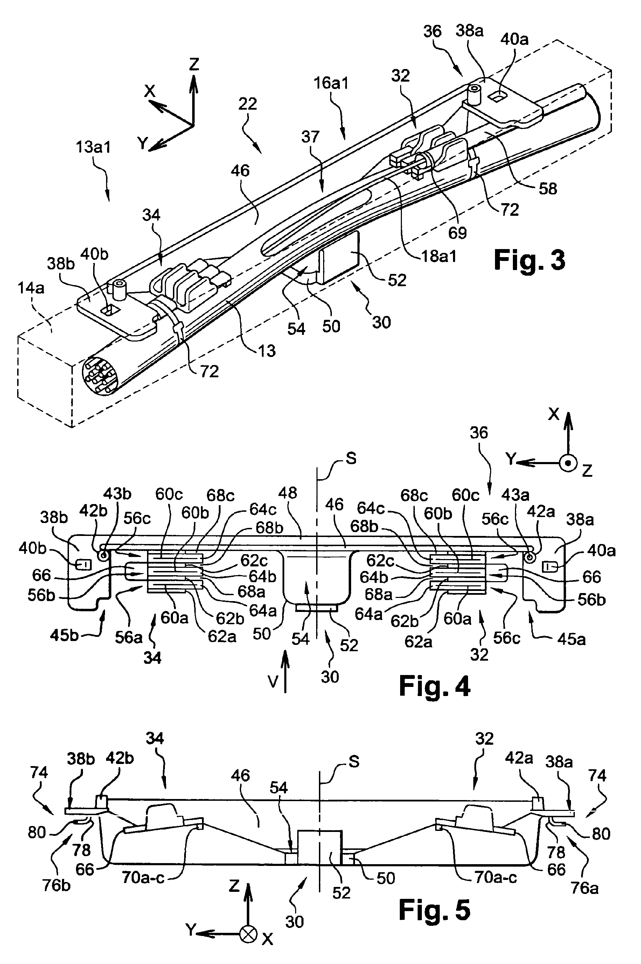

On a représenté sur la figure 3, l'ensemble 13a1 comprenant le câble 13 dépourvu du couvercle 20. Le conduit est représenté en transparence pour des raisons évidentes de clarté. Comme représenté sur les figures 3 à 5, le châssis 22 présente un plan S de symétrie passant par le milieu de sa dimension longitudinale Y et parallèle au plan XZ. Sur la figure 3, l'ensemble 13a1 comprend également le câble 13. Le châssis 22 comprend un support 30 du câble 13 à fibres optiques ainsi que deux supports 32, 34 de fibre optique. Le châssis 22 comprend également des moyens de positionnement 36 de l'organe 16a1 par rapport au conduit 14a. Comme représenté sur les figures 2 et 3, les moyens 36 positionnent le support 30 à l'intérieur du conduit dans une position dite de fonctionnement. Le câble 13 présente une ouverture 37, ici de section ovoïde, pour l'extraction de la fibre 18a1. En l'espèce, l'ouverture 37 est située sur une portion du câble 13 portée par le support 30.

Les moyens de positionnement 36 comprennent deux platines 38a, 38b aptes à prendre appui contre le conduit 14a dans la position de fonctionnement à l'extérieur du conduit. Les moyens de positionnement 36 sont agencés de sorte que, dans la position de fonctionnement, les platines 38a, 38b de l'organe 16a1 s'étendent à l'extérieur du conduit 14a. En l'espèce, chaque platine 38a, 38b présente une forme générale de plaque sensiblement rectangulaire plane s'étendant dans un plan parallèle au plan XY. Les platines 38a, 38b sont coplanaires. Chaque platine 38a, 38b présente en outre une ouverture 40a, 40b que l'on décrira plus bas. Chaque platine 38a, 38b porte également un fût de vissage 42a, 42b pour la fixation du couvercle 20 sur le châssis 22. Chaque fût 42a, 42b présente une forme sensiblement cylindrique dont l'axe est sensiblement parallèle à la direction Z, ainsi qu'un orifice central 43a, 43b pour le passage d'une vis provenant des orifices 28a, 28b. Enfin, chaque platine 38a, 38b comporte une échancrure 45a, 45b entamant un coin opposé à celui le plus proche de chaque fût 42a, 42b.

Les platines sont reliées entre elles, d'une part, par une plaque longitudinale plane 46 et, d'autre part, par une barre transversale 48. Les moyens de positionnement 36 sont agencés de sorte que, dans la position de fonctionnement, la plaque 46 s'étend dans l'ouverture 18, à la fois à l'extérieur et à l'intérieur du conduit 14a. Cette plaque 46 s'étend dans un plan sensiblement parallèle au plan YZ et présente une dimension longitudinale environ cinq fois plus grande que sa dimension verticale. La barre transversale 48 rejoint et prolonge chaque bord longitudinal de chaque platine 38a, 38b et la plaque 46 est contiguë à cette barre 48. La barre 48 s'étend le long d'une face arrière de la plaque 46.

La plaque 46 porte le support 30 du câble 13 et les supports 32, 34 de fibre optique. Le support 30 de câble est situé sensiblement au milieu de la plaque 46 dans la direction Y. Le support 30 présente une forme générale en « L » et présente une paroi d'appui transversale 50 faisant saillie à partir de la plaque 46 selon la direction X. Cette paroi 50 relie la plaque 46 et un montant vertical 52 s'étendant sensiblement parallèlement à la plaque 46. La paroi 50 présente une face 54, ici supérieure, pour l'appui du câble 13.

Les moyens de positionnement 36 sont agencés de sorte que les deux supports 32, 34 de fibre optique s'étendent, dans la position de fonctionnement de l'organe de dérivation, au moins en partie à l'intérieur du conduit 14a. Les supports 32, 34 sont situés symétriquement par rapport au plan S, de part et d'autre du support 30. Les deux supports 32, 34 s'étendent à une hauteur supérieure à la hauteur de la face d'appui 54 du support 30 par référence à la direction verticale Z. Les supports 32, 34 et le support 30 sont agencés de sorte que le câble 13 puisse s'étendre sous les supports 32, 34 et prendre appui sur le support 30 en présentant un rayon de courbure très grand, voire en étant rectiligne.

En référence à la figure 4, chaque support 32, 34 définit trois canaux 56a, 56b, 56c de maintien de la fibre optique dérivée 18a1. Comme représenté sur la figure 3, le canal 56a du support 32 maintien une gaine 58 dans laquelle pénètre la fibre optique 18a1. En variante, la gaine 58 reçoit une deuxième fibre optique. Dans une autre variante, le canal 56a maintient deux gaines 58 l'une au-dessus de l'autre dans chacune desquelles pénètrent une ou deux fibres optiques. Ainsi, dans l'exemple représenté, chaque support 32, 34 permet de dériver jusqu'à douze fibres optiques regroupées en six gaines 58 comprenant chacune deux fibres. Chaque canal 56a-c est incliné par rapport à la direction longitudinale Y de l'organe de dérivation. En l'espèce, chaque canal 56a-c présente un axe principal incliné par rapport au plan dans lequel s'étend la face 54 de sorte que l'axe principal est perpendiculaire à la direction X et intercepte ce plan. Les axes principaux des canaux 56a-c sont parallèles entre eux. Comme illustré, l'angle formé par l'axe principal de chaque canal 56a-c et le plan XY est ici d'environ 30°. Les deux supports 32, 34 sont inclinés en sens contraires. Globalement, chaque support 32, 34 est incliné en direction opposé au support de câble 30.

Chaque canal 56a-c est délimité d'une part, par une base longitudinale 60a-c s'étendant sensiblement parallèlement à l'axe principal du canal et présentant une face supérieure renflée de façon à épouser la gaine 58, et d'autre part, par deux montants verticaux 62a-c s'étendant sensiblement parallèlement au plan YZ. Chaque montant 62a-c présente une dimension selon l'axe vertical Z sensiblement égale au double du diamètre de la gaine 58. Les canaux 56a-c sont respectivement délimités par les montants 62a et 62b, 62b et 62c, 62c et la plaque 46.

Chaque support 32, 34 comprend également des prolongements 64a-c et 66 s'étendant de part et d'autres des canaux 56a-c sensiblement parallèlement aux bases longitudinales 60a-c. Les prolongements 64a-c s'étendent, selon la direction longitudinale, sur une longueur environ égale à la moitié de la longueur des bases 60a-c à partir de l'extrémité faisant face au support 30 de câble. Des espaces 68a-c séparent respectivement les prolongements 64a et 64b, 64b et 64c, 64c et la plaque 46. Les espaces 68a-c présentent une dimension selon la direction X sensiblement égale à l'épaisseur des montants 62a-c. Comme représenté sur la figure 3, le prolongement 64a permet de solidariser rigidement la gaine 58 au support 34 de fibre optique, en l'espèce au moyen d'un collier de serrage 69. En référence à la figure 5, chaque prolongement 64a-c porte un relief 70a-c de blocage du collier de serrage 69 évitant que ce dernier ne glisse suivant la direction longitudinale. Chaque prolongement 66 présente une forme générale rectangulaire et s'étend, selon la direction Y, sur une longueur environ égale à celle des prolongements 64a-c. Chaque prolongement 66 s'étend, selon la direction X, sur une largeur égale à la distance séparant les deux montants 62b, 62c. Comme représenté sur la figure 3, le prolongement 66 permet de solidariser rigidement le câble 13 au support 34 de fibre optique, en l'espèce au moyen d'un collier de serrage 72.

Comme représenté à la figure 5, le châssis 22 comprend des moyens de fixation 74 de l'organe de dérivation au conduit 14a dans la position de fonctionnement. Ces moyens de fixations 74 comprennent ici deux crochets d'emboîtement 76a, 76b du châssis sur le conduit 14a dans la position de fonctionnement. Chaque crochet 76a, 76b est porté respectivement par chaque face inférieure de chaque platine 38a, 38b. Chaque crochet 76a-b comprend deux portions 78, 80 s'étendant perpendiculairement l'une par rapport à l'autre. La portion 78 fait saillie, à partir de la face inférieure de chaque platine 38a, 38b, selon la direction Z vers l'intérieur du conduit 14a alors que la portion 80 s'étend parallèlement à chaque platine 38a, 38b à partir de la portion 78 dans le sens opposé au support 30 du câble 13. Chaque crochet 76a-b est situé approximativement au milieu de chaque platine 38a, 38b. La distance entre la portion 80 et la face inférieure de chaque platine 38a, 38b est sensiblement égale à l'épaisseur de la paroi 15b de sorte que cette dernière vient s'emboîter entre la portion 80 et la face inférieure de chaque platine 38a, 38b au niveau de l'ouverture 18. C'est le moulage des crochets 76a, 76b qui conduit à la formation des ouvertures 40a, 40b du fait de la pénétration d'éléments du moule au travers des platines 38a, 38b.

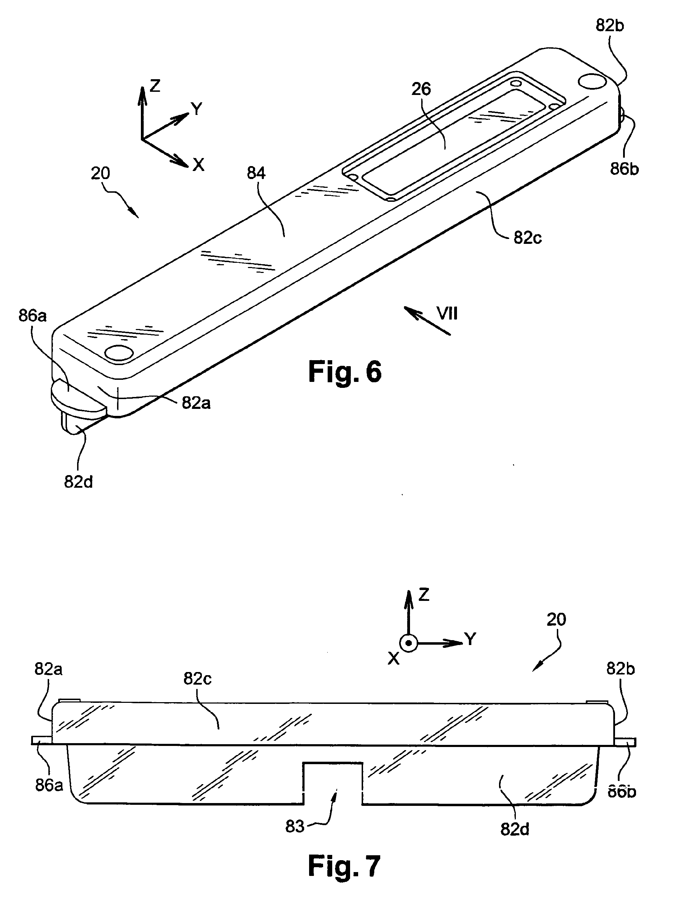

En référence aux figures 6 et 7, le couvercle 20 présente une forme générale parallélépipédique ouverte comprenant quatre parois périphériques 82a, 82b, 82c, 82d. Les parois 82a et 82b, d'une part, et les parois 82c et 82d, d'autre part, sont parallèles deux à deux. Chaque paroi 82a-d est respectivement parallèle au plan XZ, YZ, XZ, YZ. La paroi longitudinale 82d présente une hauteur selon la direction verticale Z environ égale au double de la hauteur des parois 82a-c. La paroi 82d présente également une échancrure 83 s'étendant à partir du bord inférieur de la paroi 82d sur environ 1/3 de la hauteur de la paroi 82d suivant la direction verticale Z. L'échancrure 83 présente une dimension selon la direction longitudinale sensiblement égale à la dimension longitudinale du montant vertical 52 et environ égale à 1/10^{ème} de la longueur de la paroi 82d.

Le couvercle 20 comprend également une paroi supérieure 84 sur laquelle est située l'espace d'indentification 26. Cette paroi 84 s'étend sensiblement parallèlement au plan XY. Chaque paroi d'extrémité 82a, 82b porte une oreille 86a, 86b facilitant la préhension et le positionnement du couvercle 20 sur le châssis 22. Chaque oreille 86a, 86b s'étend depuis le bord inférieur de chaque paroi 82a, 82b en saillie de chacune de celles-ci parallèlement au plan XY. Chaque oreille 86a, 86b présente un bord ayant une forme de demi ellipse et une épaisseur selon la direction Z environ égale à 1/5^{ème} de la dimension de chaque paroi 82a, 82b selon la direction Z. Chaque paroi d'extrémité 82a, 82b présente une dimension transversale selon la direction X supérieure à la distance transversale séparant la face externe de la plaque 46 des échancrures 45a, 45b. De cette façon, le couvercle 20 recouvre le châssis 22 avec la face interne de la paroi 82c prenant appui contre la face externe de la plaque 46. La paroi 82d vient se loger dans les échancrures 45b, 45c et l'échancrure 83 s'emboîte avec le montant vertical 52. Comme représenté sur la figure 2, le couvercle 20 recouvre alors partiellement les platines 38a, 38b. La plaque 46 du châssis et la paroi 82d du couvercle forment alors deux flancs en regard parallèles l'un à l'autre. La portion de la plaque 48 s'étendant au-dessus des platines pénètre dans le couvercle.

L'organe 16a1 permet de dériver la fibre optique 18a1 du câble 13 conformément au procédé dont on précisera ci-dessous les principaux aspects liés à l'invention.

On repère, sur le conduit 14a, un emplacement où l'on souhaite dériver la fibre 16a1. On ménage alors l'ouverture 18 dans la paroi 15b de sorte que la largeur de l'ouverture selon la direction Y soit sensiblement égale à la distance entre la plaque 46 et la paroi 82d et que la dimension longitudinale soit sensiblement égale à la distance entre les portions 78 des crochets 76a, 76b. Puis, on sépare la paroi 15a du reste du conduit. Puis, on positionne dans le conduit 14a l'organe de dérivation 16a1. En l'espèce, on emboîte les crochets 76a, 76b sur la paroi 15b et on fait glisser le châssis 22 selon la direction Y de sorte que la paroi 82d vienne en butée contre le bord de l'ouverture. On replace alors la paroi 15a pour refermer le conduit 14a. Puis on saisit le câble 13 situé dans le conduit et on le positionne en appui sur la face 54 du support 30. En raison du positionnement de l'organe 16a1 par rapport au conduit 14a, le tronçon du câble porté par l'organe 16a1 s'étend intégralement dans le conduit 14a. Ici, la totalité du câble 13 s'étend même dans le conduit. On ménage alors l'ouverture 37 dans le câble 13 et on extrait la fibre 18a1 à dériver. On arrime alors le câble 13 aux supports 32, 34 à l'aide des colliers de serrage 72. La fibre extraite 18a1 est ensuite enfilée dans la gaine 58 reçue dans un des canaux et est, par la suite, fixée au prolongement 64a au moyen du collier de serrage 69. Puis, on recouvre le châssis 22 par le couvercle 20 et on fixe ce dernier au châssis au moyen de vis passant dans les ouvertures 28a, 28b et vissées dans les fûts 42a, 42b.

L'invention ne se limite pas aux modes de réalisation précédemment décrits.

En effet, l'organe de dérivation pourra présenter tout type de forme et de taille et s'adapter à plusieurs types de conduit.

On pourra également prévoir que le conduit n'est pas démontable de sorte que le châssis 22 est introduit dans l'ouverture 18 suivant l'axe de cette dernière et directement fixé en position, par exemple à l'aide de vis.

## Revendications

1. Organe de dérivation de fibres optiques (16a1-4, 16b1-3) apte à être positionné par rapport à un conduit (14) recevant un câble optique (13), l'organe de dérivation (16a1-4, 16b1-3) comprenant:

2. Ensemble (13a1) comprenant :
- un conduit (14a) ; et
- un organe de dérivation (16a1) de fibres optiques selon la revendication 1.
• un support (30) de câble (13) à fibres optiques ;
• au moins un support (32, 34) de fibre optique ; le support (32,34) de fibre optique et le support (30) de câble (13) étant agencés de sorte que le câble (13) puisse être arrimé sous le support (32,34) de fibre optique et prendre appui sur le support (30) de câble (13) en présentant un rayon de courbure très grand et
• des moyens de positionnement (36) de l'organe de dérivation par rapport au conduit dans une position telle que le support de câble s'étende à l'intérieur du conduit,
**caractérisé en ce que** :
- lesdits moyens de positionnement (36) sont agencés de sorte qu'une partie (38a, 38b) au moins de l'organe de dérivation (16a1) s'étende à l'extérieur du conduit dans ladite position ; et
- l'organe de dérivation comprend un couvercle (20) pour recouvrir ladite partie.

3. Ensemble selon la revendication 2, dans lequel les moyens de positionnement (36) sont agencés de sorte que le support (32, 34) de fibre optique s'étende au moins en partie à l'intérieur du conduit (14a) dans ladite position.

4. Ensemble selon la revendication 2, dans lequel les moyens de positionnement (36) comprennent au moins une platine (38a, 38b) apte à prendre appui contre le conduit (14a) dans ladite position.

5. Ensemble selon la revendication 2, dans lequel le conduit (14a) présente une ouverture (18) ménagée dans une paroi (15b) du conduit, et les moyens de positionnement (36) sont agencés de sorte que l'organe de dérivation s'étende en partie dans l'ouverture (18) dans ladite position.

6. Ensemble selon la revendication 2, comprenant des moyens de fixation (74) de l'organe de dérivation au conduit (14a) dans ladite position.

7. Ensemble selon la revendication 6, dans lequel les moyens de fixation (74) comprennent au moins un crochet (76a, 76b) d'emboîtement de l'organe de dérivation sur le conduit dans ladite position.

8. Ensemble selon la revendication 2, dans lequel le support (32, 34) de fibre optique définit au moins un canal (56a-c) de maintien de la fibre optique.

9. Ensemble selon la revendication 8, dans lequel le ou chaque support (32, 34) de fibre optique est agencé de sorte que le ou chaque canal (56a-c) est incliné par rapport à une direction longitudinale (Y) de l'organe de dérivation.

10. Ensemble selon la revendication 2, comprenant un deuxième support (32, 34) de fibre optique, les supports de fibre optique s'étendant de part et d'autre du support (30) de câble.

11. Ensemble selon la revendication 2, dans lequel le ou chaque support (32, 34) de fibre optique s'étend intégralement à une hauteur supérieure à une hauteur d'une face d'appui (54) de câble du support (30) de câble.

12. Réseau (12) de fibres optiques, comprenant au moins un ensemble (13a1-4, 13b1-3) selon l'une des revendications 2 à 11.

## Claims

1. Optical fibre tapping member (16a1-4, 16b1-3) that can be positioned relative to a duct (14) receiving an optical cable (13), the tapping member (16a1-4, 16b1-3) comprising:
• an optical fibre cable (13) support (30);
• at least one optical fibre support (32, 34); the optical fibre support (32, 34) and the cable (13) support (30) being arranged so that the cable (13) can be secured under the optical fibre support (32, 34) and can bear against the cable (13) support (30) by having a very large radius of curvature and
• means (36) for positioning the tapping member relative to the duct in a position such that the cable support extends inside the duct, **characterized in that**:
- said positioning means (36) are arranged so that at least a part (38a, 38b) of the tapping member (16a1) extends outside the duct in said position; and
- the tapping member comprises a cover (20) for covering said part.

2. Assembly (13a1) comprising:
- a duct (14a); and
- an optical fibre tapping member (16a1) according to Claim 1.

3. Assembly according to Claim 2, in which the positioning means (36) are arranged so that the optical fibre support (32, 34) extends at least partly inside the duct (14a) in said position.

4. Assembly according to Claim 2, in which the positioning means (36) comprise at least one plate (38a, 38b) that can bear against the duct (14a) in said position.

5. Assembly according to Claim 2, in which the duct (14a) has an opening (18) formed in a wall (15b) of the duct, and the positioning means (36) are arranged so that the tapping member extends partly inside the opening (18) in said position.

6. Assembly according to Claim 2, comprising means (74) for fixing the tapping member to the duct (14a) in said position.

7. Assembly according to Claim 6, in which the fixing means (74) comprise at least one hook (76a, 76b) for fitting the tapping member on the duct in said position.

8. Assembly according to Claim 2, in which the optical fibre support (32, 34) defines at least one channel (56a-c) for holding the optical fibre.

9. Assembly according to Claim 8, in which the or each optical fibre support (32, 34) is arranged so that the or each channel (56a-c) is inclined relative to a longitudinal direction (Y) of the tapping member.

10. Assembly according to Claim 2, comprising a second optical fibre support (32, 34), the optical fibre supports extending on either side of the cable support (30).

11. Assembly according to Claim 2, in which the or each optical fibre support (32, 34) extends fully to a height greater than a height of a cable bearing face (54) of the cable support (30).

12. Optical fibre network (12), comprising at least one assembly (13a1-4, 13b1-3) according to one of Claims 2 to 11.

## Patentansprüche

1. Einrichtung zur Abzweigung von Lichtleitfasern (16al-4, 16b1-3), die bezüglich eines Kanals (14) positioniert werden kann, der ein Lichtleiterkabel (13) aufnimmt, wobei die Abzweigeinrichtung (16a1-4, 16b1-3) enthält:
- einen Halter (30) eines Lichtleitfaserkabels (13);
- mindestens einen Lichtleitfaserhalter (32, 34), wobei der Lichtleitfaserhalter (32, 34) und der Halter (30) des Kabels (13) so angeordnet sind, dass das Kabel (13) unter dem Lichtleitfaserhalter (32, 34) befestigt werden und auf dem Halter (30) des Kabels (13) aufliegen kann, indem es einen sehr großen Krümmungsradius aufweist; und
- Positioniereinrichtungen (36) der Abzweigeinrichtung bezüglich des Kanals in einer solchen Stellung, dass der Kabelhalter sich innerhalb des Kanals erstreckt,
**dadurch gekennzeichnet, dass**:
- die Positioniereinrichtungen (36) so angeordnet sind, das mindestens ein Teil (38a, 38b) der Abzweigeinrichtung (16a1) sich in der genannten Stellung außerhalb des Kanals erstreckt; und
- das die Abzweigeinrichtung einen Deckel (20) enthält, um den Teil zu bedecken.

2. Einheit (13a1), die enthält:
- einen Kanal (14a); und
- eine Abzweigeinrichtung (16a1) von Lichtleitfasern nach Anspruch 1.

3. Einheit nach Anspruch 2, bei der die Positioniereinrichtungen (36) so angeordnet sind, dass der Lichtleitfaserhalter (32, 34) sich in der Stellung zumindest zum Teil im Inneren des Kanals (14a) erstreckt.

4. Einheit nach Anspruch 2, bei der die Positioniereinrichtungen (36) mindestens eine Platte (38a, 38b) enthalten, die in der Stellung gegen den Kanal (14a) anliegen kann.

5. Einheit nach Anspruch 2, bei der der Kanal (14a) eine Öffnung (18) aufweist, die in einer Wand (15b) des Kanals ausgespart ist, und die Positioniereinrichtungen (36) so angeordnet sind, dass die Abzweigeinrichtung sich in der Stellung zum Teil in der Öffnung (18) erstreckt.

6. Einheit nach Anspruch 2, die Einrichtungen (74) zur Befestigung der Abzweigeinrichtung am Kanal (14a) in der Stellung enthält.

7. Einheit nach Anspruch 6, bei der die Befestigungseinrichtungen (74) mindestens einen Haken (76a, 76b) zum Aufschieben der Abzweigeinrichtung auf den Kanal in der Stellung enthalten.

8. Einheit nach Anspruch 2, bei der der Lichtleitfaserhalter (32, 34) mindestens einen Haltekanal (56a-c) der Lichtleitfaser definiert.

9. Einheit nach Anspruch 8, bei der der oder jeder Lichtleitfaserhalter (32, 34) so angeordnet ist, dass der oder jeder Kanal (56a-c) bezüglich einer Längsrichtung (Y) der Abzweigeinrichtung geneigt ist.

10. Einheit nach Anspruch 2, die einen zweiten Lichtleitfaserhalter (32, 34) enthält, wobei die Lichtleitfaserhalter sich zu beiden Seiten des Kabelhalters (30) erstrecken.

11. Einheit nach Anspruch 2, bei der der oder jeder Lichtleitfaserhalter (32, 34) sich vollständig auf einer höheren Höhe als eine Höhe einer Kabelauflagefläche (54) des Kabelhalters (30) erstreckt.

12. Netz (12) von Lichtleitfasern, das mindestens eine Einheit (13al-4, 13b1-3) nach einem der Ansprüche 2 bis 11 enthält.
